# EUROPEAN PATENT APPLICATION

(11) **EP 4 787 167 A1**
(43) Date of publication of application: **05.08.2026**
(21) Application number: 26151842.7
(22) Date of filing: 14.01.2026
(51) Int. Cl.: G06F 11/07

(54) **SOFTWARE UPDATE HEALTH REGRESSION DETECTION**

(30) Priority: 31.01.2025 US 202519042904
(71) Applicant: Microsoft Technology Licensing, LLC, Redmond, WA 98052 (US)
(72) Inventor: BAPAT, Akshay Sudhir, Redmond, Washington 98052 (US); SRINIVASAN, Harish, Redmond, Washington 98052 (US); NAG, Amitabh, Redmond, Washington 98052 (US); RIEDMAN, Kristofer A., Redmond, Washington 98052 (US); ZHENG, Lin, Redmond, Washington 98052 (US); MOORE, Josh Charles, Redmond, Washington 98052 (US); REPAKA, Sandeep, Redmond, Washington 98052 (US)
(74) Representative: CMS Cameron McKenna Nabarro Olswang LLP

(57) **Abstract**

Systems and methods for automatically reducing regression for a software update applied to a population of nodes in a computing environment. A regression detector performs a health analysis of the software update and detects a software regression attributed to the software update with high confidence by performing a combination of data analyses. In some examples, a time window-based observational study, a control-based observational study, and an anomaly detection analysis are performed for identifying various regression conditions. When the identified regression conditions match a set of high-confidence regression conditions configured for the health analysis, a software regression is detected. In further examples, the regression detector transmits an event based on the detected software regression to prevent the software regression from propagating to additional nodes in the computing environment.

## Description

### BACKGROUND

Cloud computing systems and other shared computing environments include multiple computing nodes that provide software applications and services to users via the Internet and/or other networks. For instance, software code for applications that provide content creation, communication, data storage, data manipulation, and/or other services, as well as the operating systems, are regularly updated to add features, correct errors, respond to user requests, and the like. In some cases, software payloads that may include many thousands of code changes across some or all of the applications or operating systems are rolled out to the computing nodes. Application of the software payloads to software systems sometimes results in software regression (e.g., where an update causes a previously working feature to fail) and/or software performance regression (e.g., where the system's performance degrades after the update).

It is with respect to these and other considerations that examples have been made. In addition, although relatively specific problems have been discussed, it should be understood that the examples should not be limited to solving the specific problems identified in the background.

### SUMMARY

The technology described herein describes systems and methods to provide automated regression detection for reducing regression for a software update applied to a population of nodes in a computing environment. A regression detector performs a health analysis of the software update and detects a software regression attributed to the software update with high confidence by performing a combination of data analyses. In some examples, a time window-based observational study, a control-based observational study, and an anomaly detection analysis are performed for identifying various regression conditions. When the identified regression conditions match a set of high-confidence regression conditions configured for the health analysis, a software regression is detected. In further examples, the regression detector transmits an event based on the detected software regression to prevent the software regression from propagating to additional nodes in the computing environment.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
**FIGURE 1** is a block diagram of a system in which a regression detector is implemented for providing automated regression detection according to an example;
**FIGURE 2** depicts example components of the regression detector;
**FIGURE 3** depicts a first example observational study performed by the regression detector according to an example;
**FIGURE 4** depicts a second example observational study performed by the regression detector according to an example;
**FIGURE 5** depicts an example anomaly detection analysis performed by the regression detector according to an example;
**FIGURE 6** depicts example output of the regression detector;
**FIGURE 7** depicts a flow chart of a method for detecting a regression according to an example; and
**FIGURE 8** is a block diagram illustrating example physical components of a computing device with which examples of the disclosure may be practiced.

### DETAILED DESCRIPTION

Implementations of the present disclosure use a regression detector to provide regression detection and management in a computing system according to examples. As noted, software updates may result in health regressions that reduce computing system performance for affected users. Accordingly, aspects described herein perform a combination of data analyses (e.g., observational studies and anomaly detection) to evaluate health data in an observation window around deployment of the software update to identify health regressions attributed to the update. In examples, further software regression caused by software update rollouts may be prevented by automatically detecting potential regressions between early phases of deployments of the software update and preventing the software regression from propagating to all nodes in a computing environment. The quality of regression detection and steps taken to address a regression issue are limited by the degree of accuracy with which the target update failure is labelled as a regression failure, as opposed to failures that just happen to be coincident with a software update rollout being labelled as regression failures, therefore it is important to disambiguate these events which may be easily misconstrued as the other. Previous observational study methods used in regression detection oftentimes produce false positives by mislabeling coincidental failures as regression failures, thus undermining trust and reliability of the regression detection system. Additionally, previous anomaly detection methods may fail to account for background noise, leading to spurious anomalies. A regression detector described herein performs a health analysis of the software update and detects a software regression attributed to the software update with high confidence by performing a combination of a time window-based observational study, a control-based observational study, and an anomaly detection analysis. Implementation of aspects presented herein allows for software regressions to be detected with a high degree of accuracy and precision and mitigated early in a software update rollout, resulting in better performance. Some embodiments described herein therefore result in more efficient use of computing system resources, and improved operation of computing systems for users.

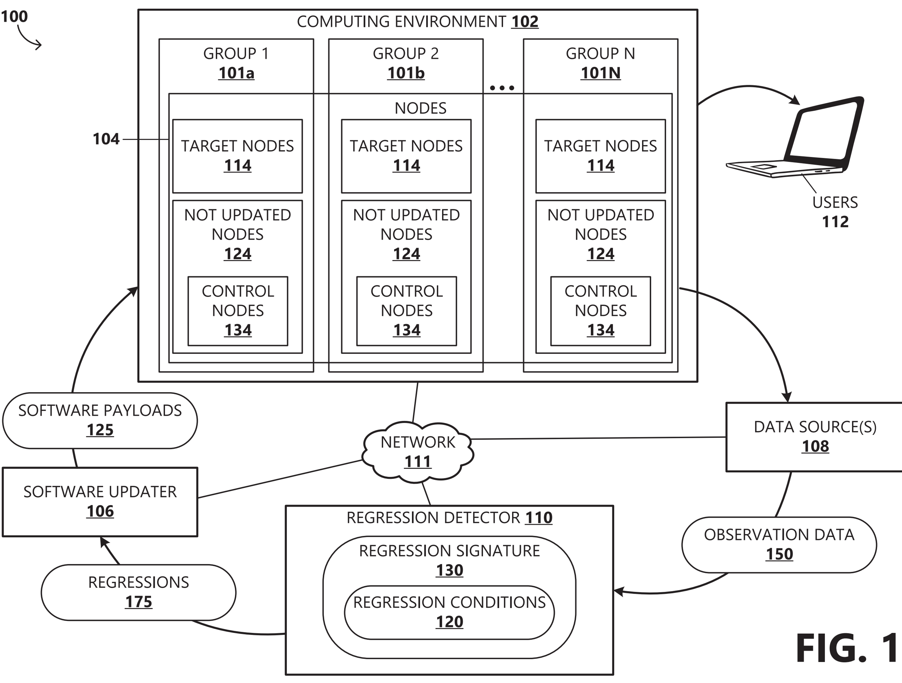

**FIGURE 1** illustrates an example system **100** in which a regression detector **110** is implemented for providing automated health regression detection. Components of the system **100** communicate via one or a combination of networks **111,** such as a wide area network (e.g., the Internet), a local area network (e.g., an Ethernet or Wi-Fi network), a cellular data network, and combinations or derivatives thereof. Although the example system **100** is depicted as including a particular combination of computing environments, devices, networks, etc., the scale and structure of the system **100** may vary and may include additional or fewer components and in different arrangements than those described in **FIGURE 1****.**

The regression detector **110** operates to automatically identify and respond to software regressions **175** attributed to a phased rollout/deployment of a software update to nodes **104** of a networked computing environment **102.** As used herein, the term "regression" generally refers to a condition where a previously functioning feature or functionality of a software application (a workload) or the node **104** on which the workload is executed experiences a failure after the software update is made to the software application. In the context of identifying a regression **175,** a "failure" can include an event where the workload or node **104** does not perform as intended or expected (e.g., a crash or failure of a particular software feature to operate, increased latency of a particular software feature, or decreased reliability of a particular software feature). According to examples, software features include features of operating systems, applications, or other types of software operating on the nodes **104,** the failure of which degrades user experience, node **104** performance, computing environment **102** performance, etc.

Nodes **104** are computing instances or devices within the computing environment **102** that include electronic processors executing software code for hosting an operating system and providing applications and/or services to users **112.** For instance, nodes **104** may include virtual machines (VMs) in a cloud computing environment, physical desktop or laptop computers, on-premises servers, mobile devices, Internet of Things (IoT) devices, embedded computing systems within vehicles, or other types of computing devices that run workloads by executing software code. In some implementations, such as in a cloud computing environment, users **112** are provided with applications and other computing services remotely, via one or more nodes **104** representing a dedicated software environment (e.g., a VM), which is secured from other nodes **104** and accessible by an authorized group of users. In examples, nodes **104** in the computing environment **102** are organized into one or more groups **101** (group 1 **101a** through group N **101N,** where N represents a number of groups). Organization of nodes **104** into groups **101** may be based on logical, geographical, or operational criteria (e.g., physical location, data center, network segment, functional role, etc.). In some implementations, a group **101** may include hundreds, thousands, tens of thousands, or more nodes **104.**

According to an aspect, a node **104** serves as a distinct endpoint in a deployment process of an update to software code executed by the node **104.** The software code may be updated to add features, correct errors, make improvements, respond to user requests, and the like. In some examples, the deployment process is executed by a software updater **106.** For instance, the software updater **106** rolls out/deploys software payloads **125** (including one or more software updates) to a target population of nodes **104** (referred to herein as target nodes **114).** Software payloads **125** include files, scripts, and/or other data created as part of the software update that is distributed to and installed on target nodes **114.** In some examples, software payloads **125** include many (e.g., one thousand or more) changes to the software code executed by the computing environment **102.** In examples, a software update is deployed to different populations of target nodes **114** of a group **101** in a plurality of phases. For instance, at a given point in time, a group **101** in the computing environment **102** can include a population of target nodes **114** that have been updated and another population of not updated nodes **124** that have not yet received the software update and/or completed deployment of the software update. One or more not updated nodes **124** may be a target for an upcoming deployment of the software update in a subsequent phase.

According to an aspect, the regression detector **110** operates to perform a health analysis corresponding to a software update. In some examples, the health analysis is performed after at least a first population of target nodes **114** in a group **101** has received the software update. For instance, the regression detector **110** is configured to identify failure signatures in collected observation data **150** indicative of a software regression **175.** According to an aspect, the regression detector **110** uses a combination of data analyses (e.g., various observational studies and anomaly detection) to evaluate observation data **150** and determine whether a regression signature **130** (including a combination of regression conditions **120)** used to identify a regression **175** with high confidence is satisfied.

As further used herein, the term observation data **150** generally refers to telemetry data, electronic messages, or other type of data received from automated communications processes by which measurements, operating status, execution results, and/or other health related data are collected and transmitted to a receiving computing device (e.g., a data source **108** or the regression detector **110).** For instance, observation data **150** may include data points representing requests received by applications, dependencies (calls to external services), traces (e.g., diagnostic logging), events, performance metrics, temperature readings, and the like. Observation data **150** further includes data points representing exceptions, for example, errors associated with one or more operations of the operating systems or software applications (e.g., workloads) hosted by the nodes **104.** In some examples, the computing environment **102** provides observation data **150** to a telemetry server or directly to the regression detector **110** using, for example, a unified logging service (ULS) or other telemetry aggregation method. In some examples, the telemetry server functions as a data source **108** of observation data **150** for the regression detector **110.** In other examples, observation data **150** includes metrics derived from raw telemetry data. For example, data sources **108** of observation data **150** may include nodes **104,** VMs, and/or workloads operating on the nodes **104,** and/or an aggregator and/or processor that collects and processes observation data **150** from nodes **104,** VMs, and/or workloads.

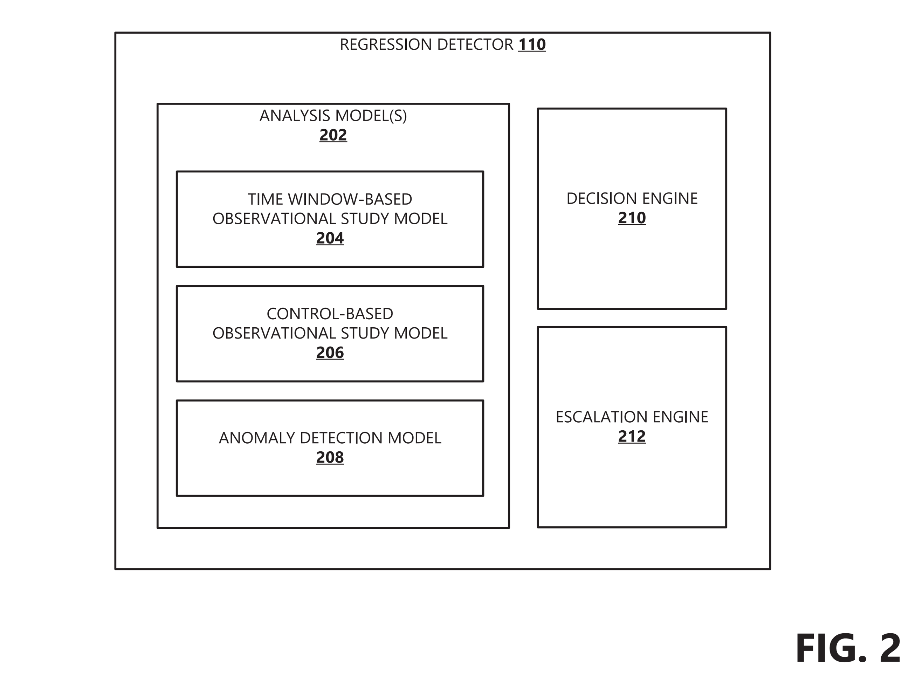

According to an aspect, and with reference now to **FIGURE 2****,** the regression detector **110** includes or is in communication with a plurality of analysis models **202** used to evaluate observation data **150** via various analysis techniques to detect regressions **175** attributed to software updates with a high degree of accuracy and precision.

In some examples, the analysis models **202** include a time window-based observational study model **204** configured to perform comparisons of observation data **150** in a first (time window-based) observational study. For instance, the time window-based observational study model **204** may be configured to perform T-tests (e.g., independent or paired T-tests) that compare the means of two time windows, propensity score matching, and/or other statistical testing methods to determine differences between occurrences of failures between different time windows around deployment of a software update. A T-test, as used herein, refers to a statistical analysis that determines whether the difference between the means of two or more groups is statistically significant.

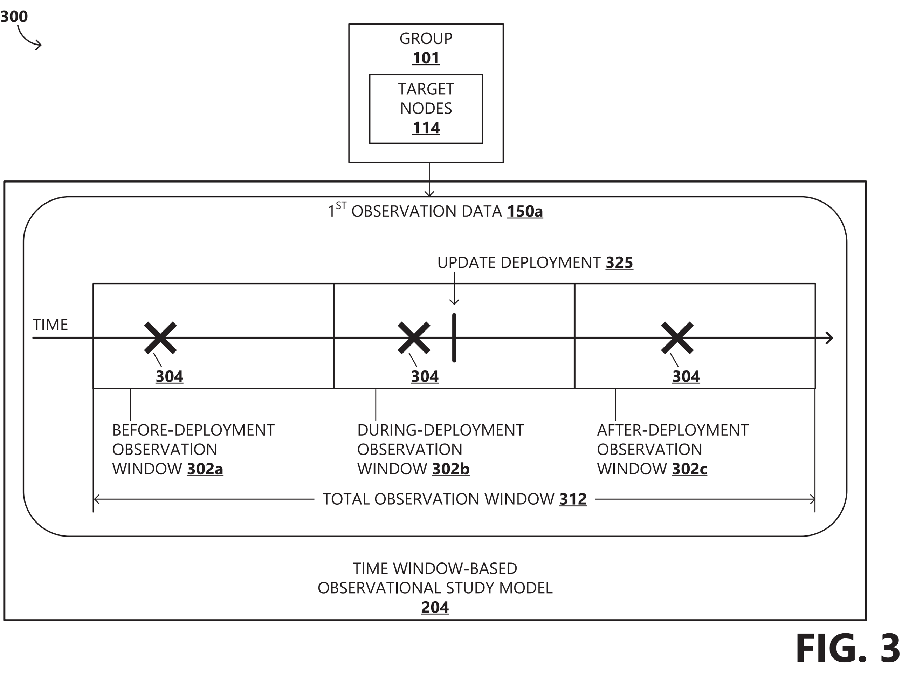

**FIGURE 3** includes a depiction of a first example observational study **300** performed by the time window-based observational study model **204.** In the first observational study **300,** various time-based observation windows **302a-302c** (collectively, observation windows **302)** are defined within a total observation window **312** for normalizing and evaluating first observation data **150a** collected from each target node **114** that received the software update. The total observation window **312** refers to a specific period of time around the time of deployment **325** of the software update to a target node **114** during which first observation data **150a** of the target node **114** is analyzed. For instance, the total observation window **312** defines start and end points for observing first observation data **150a** collected from target nodes **114,** VMs, and/or workloads operating on the target nodes **114.** As an example, if the total observation window **312** is configured as a two-week duration, the first observation data **150a** includes data collected from a start point of one week before the software update was deployed on the target node **114** until an end point of one week after the software update was deployed. The duration of the total observation window **312** may be shorter or longer and, in some examples, is configurable/adjustable.

In examples, the total observation window **312** is segmented in a plurality of time-based observation windows **302** and the first observation data **150a** collected from the target nodes **114** is normalized into the time-based observation windows **302.** According to one example, the first observation data **150a** is normalized into (e.g., assigned to) one of a 'before-deployment' observation window **302a** (e.g., from 7 days before the deployment **325** to 2 hours before the deployment **325),** a 'during-deployment' observation window **302b** (e.g., from 2 hours before the deployment **325** to 2 hours after the deployment **325),** and an 'after-deployment' observation window **302c** (e.g., from 2 hours after the deployment **325** to 7 days after the deployment **325)** for analysis.

In some examples, the time window-based observational study model **204** evaluates the first observation data **150a** in each observation window **302** and identifies and records occurrences of failures **304** in each observation window **302.** Failures **304** may be identified based on failure criteria, where thresholds are set for different conditions that represent an event where a workload or node **104** on which the workload is executed does not perform as intended or expected (e.g., a crash or failure of a particular software feature to operate, increased latency of a particular software feature, or decreased reliability of a particular software feature). In examples, a failure **304** that is identified as occurring within the during-deployment observation window **302b** is recorded as a "during" occurrence, a failure **304** that is identified as occurring within the before-deployment observation window is recorded as a "before" occurrence, and a failure **304** that is identified as occurring within the after-deployment observation window **302c** is recorded as an "after" occurrence.

The time window-based observational study model **204** further makes comparisons between ratios of occurrences of failures **304** in the different observation windows **302** (e.g., compare failure rates between the after and before-deployment observation windows **302c** and **302a** and failure rates between the during and before-deployment observation windows **302b** and **302a).** In some examples, when the failure rate of the after-deployment observation window **302c** is greater than the failure rate of before-deployment observation window **302a** (e.g., by at least a threshold amount), the deployment **325** of the software update is flagged as having a first regression condition **120a.** In further examples, when the failure rate of the during-deployment observation window **302b** is greater than the failure rate of before-deployment observation window **302a** (e.g., by at least a threshold amount), the deployment **325** of the software update is flagged as having a second regression condition **120b.**

With reference again to **FIGURE 2****,** the analysis models **202** utilized by the regression detector **110** further include a control-based observational study model **206** configured to perform comparisons of observation data **150** in a second (control-based) observational study. For instance, the control-based observational study model **206** is configured to perform T-tests, propensity score matching, and/or other statistical testing methods to determine differences between occurrences of failures between control nodes **134** of the group **101** and target nodes **114** in different time windows around deployment **325** of the software update.

In examples, the regression detector **110** selects a control group for comparison against the target nodes **114.** For instance, the control group includes a subset of not updated nodes **124** (referred to as control nodes **134)** that share one or a combination of control factors in common with the target nodes **114).** In some examples, a control node **134** is selected based on a control factor such as having a same or similar hardware and/or software type as the target nodes **114** of the software update (e.g., model and configuration of servers in a data center, model and storage capacity of smartphones in a fleet, model and processor type of computers in an enterprise). For instance, the control nodes **134** represents a pre-update population of the group **101** while the target nodes **114** represent an updated population of the group **101.**

The regression detector **110** further obtains second observation data **150b** collected from the control nodes **134.** The second observation data **150b** includes data collected from each control node **134** (e.g., or from VMs and/or workloads operating on the control node **134)** during a control observation window **402** defined for evaluation of ambient data in the health analysis. In some examples, the control observation window **402** has a start point that corresponds to the start point of the total observation window **302** of the first target node **114** that the software update was deployed to in a particular phase of the update deployment and an end point that corresponds to the end point of the total observation window **302** of the last target node **114** that the software update was deployed to in the particular phase. In other examples, the control observation window **402** has a similar duration to the total observation window **312** that was defined for evaluation of the first observation data **150a.**

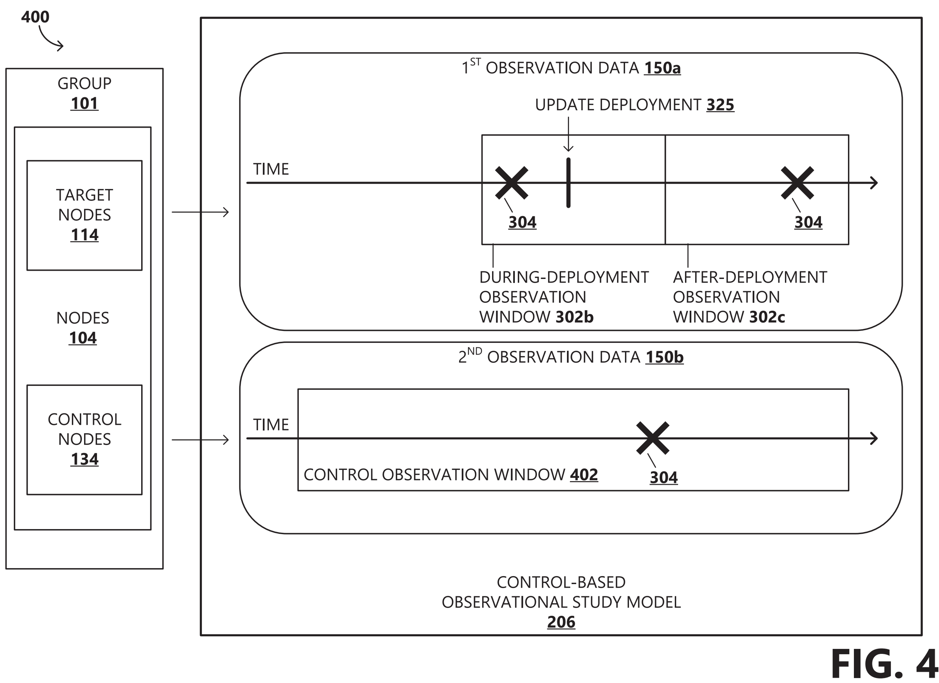

**FIGURE 4** includes a depiction of a second example observational study **400** performed by the control-based observational study model **206.** In the second observational study **400,** the control-based observational study model **206** compares failure rates of target nodes **114** of the software update in various observation windows **302** around the update deployment **325** to an ambient failure rate of the control nodes **134.** For instance, the control-based observational study model **206.** In examples, the control-based observational study model **206** evaluates the second observation data **150b** in the control observation window **402** to determine indications of occurrences of failures **304** of control nodes **134** (e.g., failure of the control node **134** or failure of a workload processed by the control node **134).** Failures **304** may be identified based on failure criteria, where thresholds are set for different conditions that represent an event where a workload or control node **134** on which the workload is executed does not perform as intended or expected (e.g., a crash or failure of a particular software feature to operate, increased latency of a particular software feature, or decreased reliability of a particular software feature). In examples, a failure **304** that is identified as occurring in the second observation data **150b** within the control observation window **402** is recorded as an occurrence of a "control" failure **304.** The control-based observational study model **206** further calculates an ambient failure rate of the control group/group **101** (e.g., a ratio of control failures **304** to the number of control nodes **134** in the control group).

In examples, the control-based observational study model **206** further makes comparisons between the calculated ambient failure rate and the failure rates of target nodes **114** in various time-based observation windows **302.** In some examples, the time-based observation window failure rates of target nodes **114** are determined by the time-based observational study model **204** and provided to the control-based observational study model **206** for use in the second observational study **400.** The control-based observational study model **206** further determines whether results of a comparison between the ambient failure rate and one or more time-based observation window failure rates satisfy a regression condition **120** defined (e.g., configured) for the health analysis. In some examples, when the failure rate of the target nodes **114** in the after-deployment observation window **302c** is greater than the ambient failure rate (e.g., by at least a threshold amount), the software update is flagged as having a third regression condition **120c.** In further examples, when the failure rate of the target nodes **114** in the during-deployment observation window **302b** is greater than the ambient failure rate (e.g., by at least a threshold amount), the software update is flagged as having a fourth regression condition **120d.** In other implementations, additional or other regression conditions **120** may be used for comparisons between the first and second observation data **150a** and **150b.**

With reference again to **FIGURE 2****,** the analysis models **202** utilized by the regression detector **110** for performing a health analysis further include an anomaly detection model **208** configured to perform anomaly detection to identify patterns or outliers in observation data **150** that do not conform to expected behavior after the software update is deployed. Example types of anomaly detection models **208** that may be used by the regression detector **110** include an AutoRegressive Integrated Moving Average (ARIMA) model that combines autoregression (AR), differencing (I), and moving average (MA) to predict future points in a series; a Seasonal AutoRegressive Integrated Moving-Average with eXogenous factors (SARIMAX) model that is an extension of the ARIMA model that includes support for seasonality (S) and exogenous variables (X); a Vector AutoRegression (VAR) model that captures linear interdependencies among multiple time series, where each variable in the system is modeled as a linear function of past values of itself and the past values of all the other variables in the system; or another type of model that detects anomalies by forecasting expected values and identifying deviations from the forecasted values.

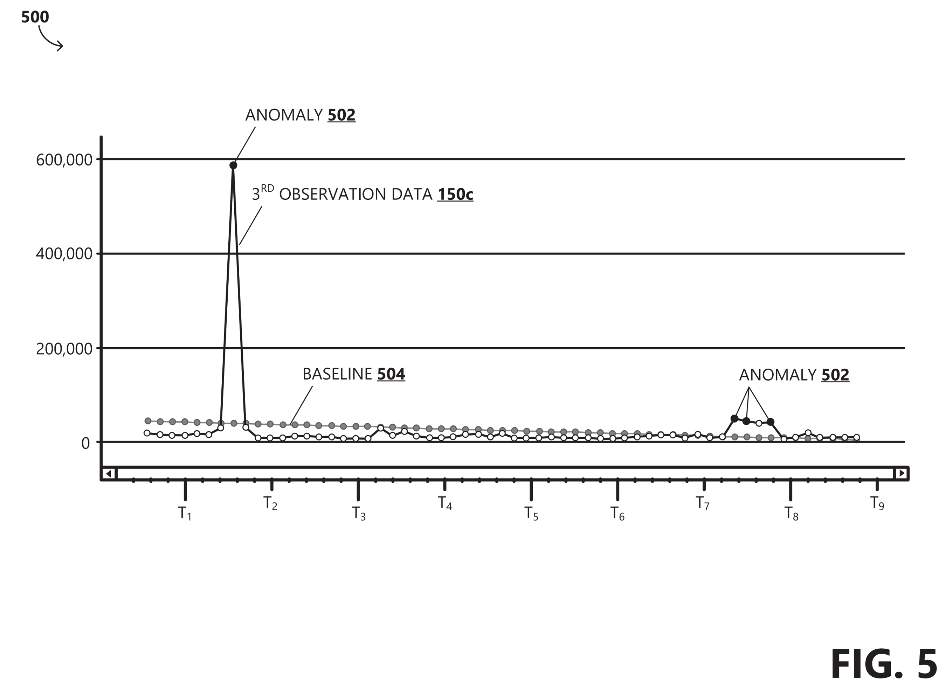

**FIGURE 5** includes a depiction of an example anomaly detection analysis **500** performed by the anomaly detection model **208** for identifying and recording anomalies **502** of target node health in association with the software update deployment **325.** In examples, the anomaly detection model **208** establishes a baseline value **504** of one or a combination of health metrics (e.g., third observation data **150c** collected from target nodes **114,** VMs, and/or workloads operating on the target nodes **114** that indicate health of the target nodes **114).** In some examples, the third observation data **150c** includes health data collected within the during and after-deployment observation windows **302b** and **302c** of the target nodes **114,** where the anomaly detection model **208** identifies and flags a value as an anomaly **502** that exceeds the baseline value **504** by at least a threshold amount (e.g., N standard deviations). One example health metric that may be used for anomaly detection is an average number of failures per day for a target node **114.** In examples, the anomaly detection model **208** flags the deployment **325** of the software update as having a fifth regression condition **120e** when an anomaly **502** is identified.

With reference again to **FIGURE 2****,** the regression detector **110** further includes a decision engine **210** configured to receive output of the analysis models **202** and generate a failure signature of the software update based on the received output. For instance, the failure signature may be determined based on one or a combination of flagged regression conditions **120** that indicate whether the failure rate of the after-deployment observation window **302c** is greater than the failure rate of before-deployment observation window **302a,** the failure rate of the during-deployment observation window **302b** is greater than the failure rate of before-deployment observation window **302a,** the failure rate of the target nodes **114** in the after-deployment observation window **302c** is greater than the ambient failure rate, the failure rate of the target nodes **114** in the during-deployment observation window **302b** is greater than the ambient failure rate, and/or whether an anomaly **502** is identified.

In examples, the decision engine **210** compares the failure signature against one or more high confidence regression signatures **130** defined for the health analysis to identify a regression **175** attributed to the software update with high confidence. In some examples, the regression signature(s) **130** and/or combination of regression conditions **120** that define the regression signature(s) **130** is configurable (e.g., based on user (customer) specifications). In some implementations, a user interface is provided via which a user (customer) or a software developer may interact to configure or adjust one or more regression signatures **130** and/or regression conditions **120,** which are communicated to the regression detector **110.** When a regression **175** is identified, the decision engine **210** flags the software update as having a potential regression attributed to it (e.g., the probability the software update will cause a regression exceeds a threshold amount).

One example set of regression conditions **120** used to identify a regression **175** with high confidence includes a combination of the first regression condition **120a** (e.g., the failure rate of the after-deployment observation window **302c** is greater than the failure rate of before-deployment observation window **302a),** the third regression condition **120c** (e.g., the failure rate of the target nodes **114** in the after-deployment observation window **302c** is greater than the ambient failure rate), and the fifth regression condition **120e** (e.g., an anomaly **502** is identified). Another example set of regression conditions **120** used to identify a regression **175** with high confidence includes a combination of the second regression condition **120b** (e.g., the failure rate of the during-deployment observation window **302b** is greater than the failure rate of before-deployment observation window **302a),** the fourth regression condition **120d** (e.g., the failure rate of the target nodes **114** in the during-deployment observation window **302b** is greater than the ambient failure rate), and the fifth regression condition **120e** (e.g., an anomaly **502** is identified). Other sets of regression conditions **120** may be used to identify a regression **175** with high confidence. By using a combination of data analyses and the set of regression conditions **120,** the regression detector **110** accounts for background noise and avoids identifying false positives or low impact problems. For instance, the decision engine **210** is able to identify emerging regression trends with a high degree of accuracy and precision.

In examples, the regression detector **110** further includes an escalation engine **212.** When a software update is flagged as having a potential regression **175,** the escalation engine **212** generates and transmits an event based on the regression **175.** In some examples, the escalation engine **212** generates and transmits an incident log entry of the regression **175** to an intended recipient (e.g., an incident management system). In further examples, the escalation engine **212** generates and transmits a message (e.g., email, text message, or chat message) of the regression **175** to a team member associated with the deployment **325** of the software update. In other examples, transmitting the event includes transmitting a command to halt deployment of the software payload **125** for not updated nodes **124** that have not completed deployment **325** of the software payload **125.** In yet other examples, transmitting the event includes transmitting a command to revert deployment of the software payload **125** for target nodes **114** that have completed deployment **325** of the software payload **125.**

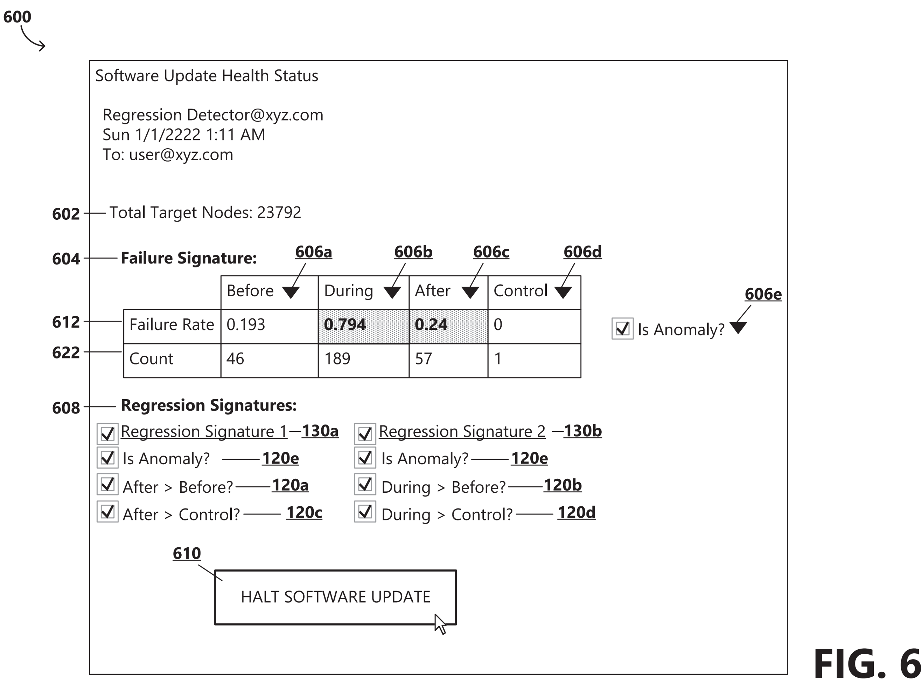

An example message **600** of an identified regression **175** is depicted in **FIGURE 6****,** where the message **600** includes information determined based on performing a health analysis for a software update. In some examples, the message **600** includes first information **602** about the number of target nodes **114** included in the health analysis. In further examples, the message **600** includes second information **604** about a failure signature determined for the software update based on results of the analysis models **202.** For example, the failure signature includes indications of failures **304** that occurred in various observation windows of the observational studies **300** and **400** and an indication of anomalies **502** detected in the anomaly detection analysis **500.** In some examples, the second information **604** includes a count **622** of the identified occurrences of before failures **304,** during failures **304,** after failures **304,** and control failures **304** and determines failures rates **612** for each observation window **302** and the control group. In some examples, one or more options **606a-606e** are included in association with one or more elements of the failure signature, which when selected, provide additional information about the selected failure signature element. For instance, selection of an option **606c** associated with the after-deployment observation window **302c** causes a display of information about the failures **304** identified after the software update was deployed. In some examples, the message **600** further includes third information **608** about one or more regression signatures **130a** and **130b** defined for the health analysis. For instance, the third information **608** includes indications of satisfied regression conditions **120a-120e** included in one or more of the regression signatures **130a** and **130b** causing the software update to be flagged as a regression **175** with high confidence. In further examples, one or more action options **610** are included in the message **600.** For instance, selection of a "halt" action option **610** may cause a command to be transmitted to the software updater **106** to halt deployment of the software payload **125** for not updated nodes **124** that have not completed deployment **325** of the software payload **125.** Other types of messages **600** and information included in the messages **600** are contemplated.

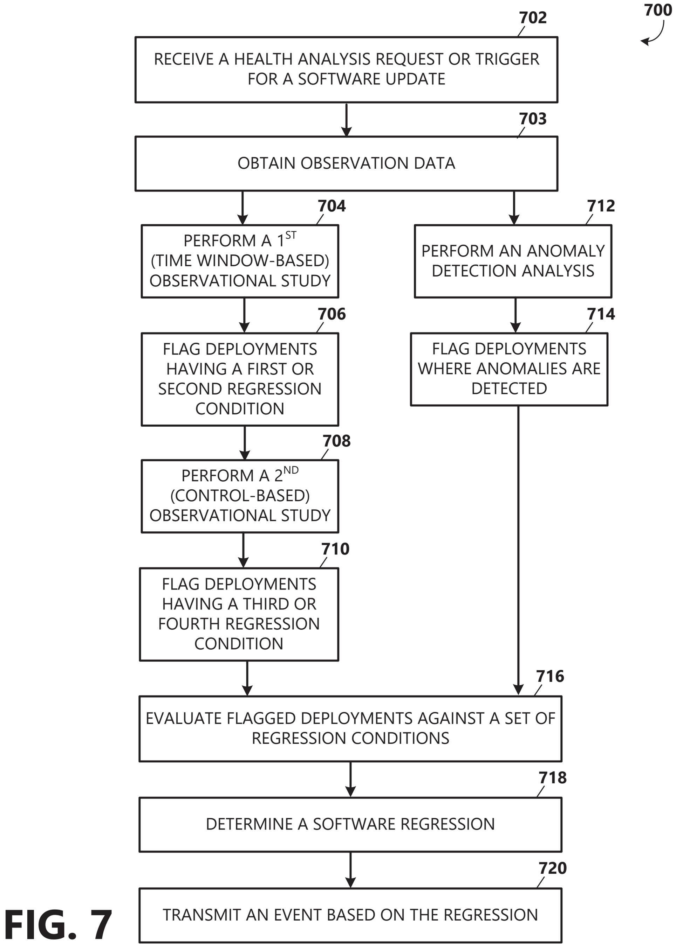

With reference now to **FIGURE 7****,** a flow diagram of an example method **700** for detecting a regression **175** related to a software update with high confidence is depicted. At operation **702,** a request is received by the regression detector **110** or the regression detector **110** is otherwise triggered to perform a health analysis of the software update. In some examples, the health analysis is triggered or requested after the software update has been deployed in a first phase to a first population of target nodes **114** in a group **101** in a computing environment **102** and prior to the software update being deployed in a second phase to a second population of not updated nodes **124** in the group **101.** For instance, the health analysis is requested or triggered to determine whether the software updater **106** should proceed or continue with rolling out a software payload **125** of the software update in an upcoming phase. According to an example, the health analysis is triggered after at least a threshold amount of time has passed since deployment **325** of the software update to a last one of the target nodes **114** in the first population. The threshold amount of time may be based on the duration of the total observation window **312** defined for the health analysis.

At operation **703,** the regression detector **110** obtains observation data **150** to evaluate using a plurality of analysis models **202.** The observation data **150** may include data collected from nodes **104,** VMs, and/or workloads operating on the nodes **104.** In examples, the regression detector **110** obtains first observation data **150a** associated with the target nodes **114** of the software update. In some examples, the regression detector **110** retrieves or otherwise receives (using a suitable electronic communication protocol or an application programming interface (API)) a plurality of identifiers identifying the target nodes **114** in the group **101** that have completed deployment **325** of the software payload **125** of the software update (e.g., from the software updater **106).** In further examples, the software updater **106** provides additional information about the completed deployments **325,** such as a time of the deployment **325** to each identified target node **114.** Further, the regression detector **110** retrieves or otherwise receives first observation data **150a** corresponding to each of the identified target nodes **114** from one or more data sources **108.** In examples, the first observation data **150a** includes data recorded within the defined total observation window **312** around the time of deployment **325.** For instance, if the total observation window **312** is configured as a two week window, the first observation data **150a** for each target node **114** may include data recorded from a week prior to the deployment **325** of the software update to the target node **114** until a week after the deployment **325.**

In examples, the regression detector **110** additionally obtains second observation data **150b** associated with a control group representative of the group **101** for comparison against the first observation data **150a** of the target nodes **114.** According to an aspect, the regression detector **110** selects control nodes **134** for the control group based on various control factors (e.g., the control group is in the same group **101** as the target nodes **114** and has a similar hardware and/or software configuration to the target nodes **114).** In some examples, the control factors are configurable (e.g., additional and/or other control factors may be used to select control nodes **134).** According to an example, the regression detector **110** retrieves or otherwise receives (using a suitable electronic communication protocol or an API) a plurality of identifiers identifying the not updated nodes **124** included in the group **101** that have not completed deployment **325** of the software payload **125** of the software update (e.g., from the software updater **106).** The regression detector **110** further retrieves or otherwise receives information about other control factors (e.g., configuration of the target nodes **114** and configurations of the not updated nodes **124)** and selects not updated nodes **124** that satisfy the other control factors (e.g., are similarly configured to the target nodes **114)** as control nodes **134** of the control group. In further examples, the regression detector **110** retrieves or otherwise receives second observation data **150b** of each control node **134** recorded within a control observation window **402** (e.g., defined for the health analysis). In some examples, the control observation window **402** corresponds to the total observation window **312** defined for the health analysis.

In some examples, the regression detector **110** additionally obtains third observation data **150c** including various indications of health of the target nodes **114** during and after deployment **325** of the software update to the target nodes **114.** In other examples, the third observation data **150c** is included in the first observation data **150a.**

At operation **704,** the regression detector **110** performs a first observational study **300** (e.g., a time window-based observational study) of the first observation data **150a.** In examples, the time window-based observational study model **204** normalizes the first observation data **150a** of the target nodes **114** into various time-based observation windows **302** (e.g., a before-deployment observation window **302a,** a during-deployment observation window **302b,** and an after-deployment observation window **302c).** Further, the time window-based observational study model **204** evaluates the first observation data **150a** in each observation window **302** to determine indications of occurrences of failures **304** of target nodes **114** (e.g., failure of the target node **114** or failure of a workload processed by the target node **114).** In examples, ratios of occurrences of failures **304** of target nodes **114** during each time-based observation window **302** to the total number of target node deployments **325** (e.g., failure rates) are determined and compared.

In further examples, the time window-based observational study model **204** determines whether results of a comparison between different time-based observation windows **302** satisfy a regression condition **120** defined (e.g., configured) for the health analysis. According to an example implementation, when the failure rate of the after-deployment observation window **302c** is greater than the failure rate of before-deployment observation window **302a,** at operation **706,** the time window-based observational study model **204** flags the software update as having a first regression condition **120a.** Additionally at operation **706,** the time window-based observational study model **204** flags the software update as having a second regression condition **120b** when the failure rate of the during-deployment observation window **302b** is greater than the failure rate of before-deployment observation window **302a.** In other implementations, additional or other regression conditions **120** may be used to evaluate the observation window-sorted first observation data **150a.**

At operation **708,** the regression detector **110** performs a second observational study **400** (e.g., a control-based observational study) for comparing the second observation data **150b** to the first observation data **150a.** In examples, the control-based observational study model **206** evaluates the second observation data **150b** in the control observation window **402** to determine indications of occurrences of failures **304** of control nodes **134** (e.g., failure of the control node **134** or failure of a workload processed by the control node **134).** The control-based observational study model **206** further calculates an ambient failure rate of the control group/group **101** (e.g., a ratio of occurrences of control node failures **304** to the number of control nodes **134** in the control group).

In some examples, the time-based observation window failure rates of target nodes **114** are determined by the time-based observational study model **204** and provided to the control-based observational study model **206** for use in the second observational study **400.** For example, the control-based observational study model **206** makes comparisons between the calculated ambient failure rate and the failure rates of target nodes **114** in various time-based observation windows **302.** Further, the control-based observational study model **206** determines whether results of a comparison between the ambient failure rate and one or more time-based observation window failure rates satisfy a regression condition **120** defined (e.g., configured) for the health analysis. According to an example implementation, when the failure rate of the target nodes **114** in the after-deployment observation window **302c** is greater than the ambient failure rate, the control-based observational study model **206** flags the software update as having a third regression condition **120c** at operation **710.** Additionally at operation **710,** the control-based observational study model **206** flags the software update as having a fourth regression condition **120d** when the failure rate of the target nodes **114** in the during-deployment observation window **302b** is greater than the ambient failure rate. In other implementations, additional or other regression conditions **120** may be used for comparisons between the first and second observation data **150a** and **150b.**

At operation **712,** the anomaly detection model **208** performs anomaly detection to identify patterns or outliers in the third observation data **150c** that do not conform to expected behavior after the software update is deployed. In some implementations, operation **712** is performed in parallel to operations **704-710.** In other implementations, operation **712** is performed before operations **704-710.** In yet other implementations, operation **712** is performed after operations **704-710.** In examples, the anomaly detection model **208** establishes a baseline value **504** of one or a combination of health metrics corresponding to the third observation data **150c** that indicate health of the target nodes **114** (e.g., an average number of failures per day) and flags values as anomalies **502** that exceed the baseline value **504** by at least a threshold amount (e.g., N standard deviations). In examples, at operation **714,** the anomaly detection model **208** flags the deployment **325** of the software update as having a fifth regression condition **120e** when an anomaly **502** is detected.

At operation **716,** the regression detector **110** evaluates output of the analysis models **202** and generates a failure signature of the software update based on the received output. For instance, the failure signature may include a combination of flags indicating one or a combination of regression conditions **120** (e.g., the failure rate of the after-deployment observation window **302c** is greater than the failure rate of before-deployment observation window **302a,** the failure rate of the during-deployment observation window **302b** is greater than the failure rate of before-deployment observation window **302a,** the failure rate of the target nodes **114** in the after-deployment observation window **302c** is greater than the ambient failure rate, the failure rate of the target nodes **114** in the during-deployment observation window **302b** is greater than the ambient failure rate, and/or an anomaly **502** is identified). In examples, the decision engine **210** compares the failure signature against a high confidence regression signature **130** defined for the health analysis to identify a regression **175** with high confidence. When a regression **175** is identified, the decision engine **210** flags the software update as having a potential (e.g., a probability exceeding a threshold amount) regression attributed to it at operation **718.**

One example high confidence regression signature **130** used to identify a regression **175** with high confidence includes a combination of the first regression condition **120a** (e.g., the failure rate of the after-deployment observation window **302c** is greater than the failure rate of before-deployment observation window **302a),** the third regression condition **120c** (e.g., the failure rate of the target nodes **114** in the after-deployment observation window **302c** is greater than the ambient failure rate), and the fifth regression condition **120e** (e.g., an anomaly **502** is identified). Another example high confidence regression signature **130** that can be used to identify a regression **175** with high confidence includes a combination of the second regression condition **120b** (e.g., the failure rate of the during-deployment observation window **302b** is greater than the failure rate of before-deployment observation window **302a),** the fourth regression condition **120d** (e.g., the failure rate of the target nodes **114** in the during-deployment observation window **302b** is greater than the ambient failure rate), and the fifth regression condition **120e** (e.g., an anomaly **502** is identified). Other high confidence regression signatures **130** may be used to identify a regression **175** with high confidence.

When the software update is flagged as having a potential regression **175** at operation **718,** the regression detector **110** generates and transmits an event based on the regression **175** at operation **720.** In some examples, transmitting the event includes generating and transmitting an incident log entry of the regression **175** to an intended recipient (e.g., an incident management system). In further examples, transmitting the event includes generating and transmitting a message (e.g., email, text message, or chat message) of the regression **175** to a team member associated with the deployment **325** of the software update. In other examples, transmitting the event includes transmitting a command to the software updater **106** to halt deployment of the software payload **125** to not updated nodes **124** that have not completed deployment **325** of the software payload **125.** In yet other examples, transmitting the event includes transmitting a command to the software updater **106** to revert deployment of the software payload **125** for target nodes **114** that have completed deployment **325** of the software payload **125.** By performing operations of method **700,** software regression **175** is detected with high confidence and mitigated early in a software payload **125** rollout, resulting in a better user experience and an increase in software security and stability. Some aspects described herein therefore result in more efficient use of computing system resources, and improved operation of computing systems for users.

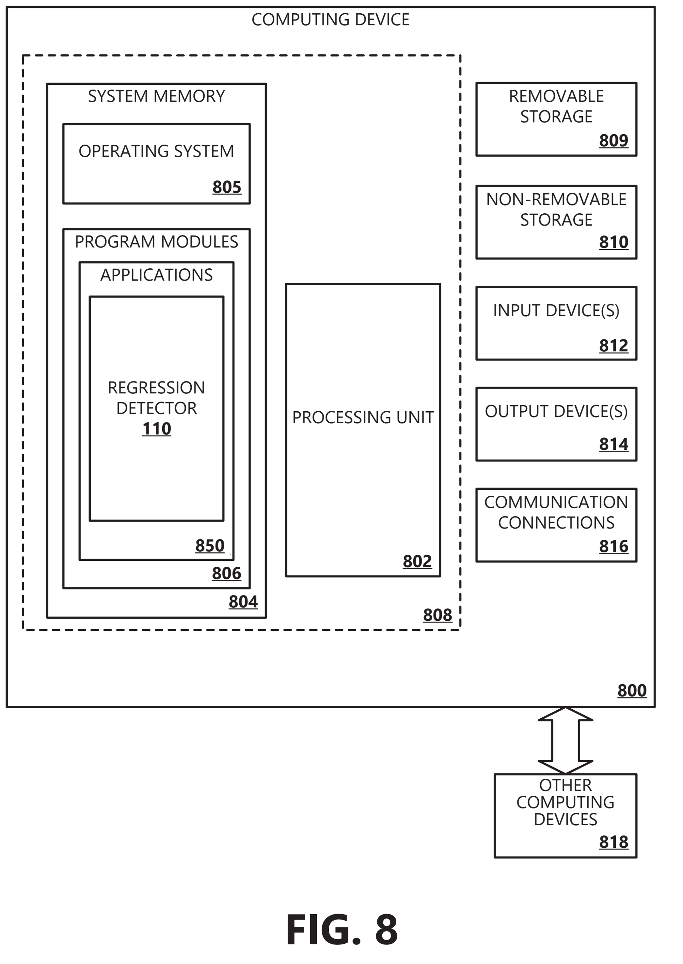

**FIGURE 8** and the associated description provide a discussion of a variety of operating environments in which examples of the invention may be practiced. However, the devices and systems illustrated and discussed with respect to **FIGURE 8** is for purposes of example and illustration and is not limiting of a vast number of computing device configurations that may be utilized for practicing aspects of the invention, described herein. **FIGURE 8** is a block diagram illustrating physical components (i.e., hardware) of a computing device **800** with which examples of the present disclosure may be practiced. In a basic configuration, the computing device **800** may include at least one processing unit and a system memory **804.** in examples, the processing unit(s) (e.g., processors) are referred to as a processing system **802.** Depending on the configuration and type of computing device, the system memory **804** may comprise volatile storage (e.g., random access memory), non-volatile storage (e.g., read-only memory), flash memory, or any combination of such memories. The system memory **804** may include an operating system **805** and one or more program modules **806** suitable for running software applications **850** (e.g., regression detector **110).**

The operating system **805,** for example, may be suitable for controlling the operation of the computing device **800.** Furthermore, aspects of the invention may be practiced in conjunction with a graphics library, other operating systems, or any other application program and is not limited to any particular application or system. This basic configuration is illustrated in **FIGURE 8** by those components within a dashed line **808.** The computing device **800** may have additional features or functionality. For example, the computing device **800** may also include additional data storage devices (removable and/or non-removable) such as, for example, magnetic disks, optical disks, or tape. Such additional storage is illustrated in **FIGURE 8** by a removable storage device **809** and a non-removable storage device **810.**

As stated above, a number of program modules and data files may be stored in the system memory **804.** While executing on the processing system **802,** the program modules **806** may perform processes including one or more of the operations of the method **700** illustrated in **FIGURE 7****.** Other program modules that may be used in accordance with examples of the present invention and may include applications such as electronic mail and contacts applications, word processing applications, spreadsheet applications, database applications, slide presentation applications, drawing or computer-aided application programs, etc.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in **FIGURE 8** may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to generating suggested queries, may be operated via application-specific logic integrated with other components of the computing device **800** on the single integrated circuit (chip). Examples of the present disclosure may also be practiced using other technologies capable of performing logical operations such as, for example, AND, OR, and NOT, including mechanical, optical, fluidic, and quantum technologies.

The computing device **800** may also have one or more input device(s) **812** such as a keyboard, a mouse, a pen, a sound input device, a touch input device, etc. The output device(s) **814** such as a display, speakers, a printer, etc. may also be included. The aforementioned devices are examples and others may be used. The computing device **800** may include one or more communication connections **816** allowing communications with other computing devices **818.** Examples of suitable communication connections **816** include RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **804,** the removable storage device **809,** and the non-removable storage device **810** are all computer storage media examples (i.e., memory storage.) Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device **800.** Any such computer storage media may be part of the computing device **800.** Computer storage media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, radio frequency (RF), infrared, and other wireless media.

Alternatively or in addition to the other examples described herein, examples include any combination of the following clauses:
Clause A. A method, comprising: identifying, from a group of computing nodes, a set of target nodes that have completed a deployment of a software update; obtaining first observation data of the set of target nodes; normalizing the first observation data into a plurality of time-based observation windows around the deployment of the software update; determining a target node failure rate of the set of target nodes in each of the time-based observation windows; detecting a first regression condition associated with the software update by comparing the determined target node failure rates; identifying, from the group of computing nodes, a set of nodes that have not completed deployment of the software update; selecting, from the identified set of nodes that have not completed deployment of the software update, a set of control nodes that have a control factor in common with the set of target nodes; obtaining second observation data of the set of control nodes; determining a control failure rate of the set of control nodes; detecting a second regression condition associated with the software update by comparing the determined control failure rate and one or more of the determined target node failure rates; obtaining third observation data of the set of target nodes; determining a baseline value of a health metric; detecting a third regression condition associated with the software update by comparing the third observation data with the baseline value; detecting a software regression associated with the software update by comparing the first regression condition, the second regression condition, and the third regression condition with a set of high-confidence regression conditions; and in response to detecting the software regression, transmitting an event based on the software regression.
Clause B. The method of clause A, wherein normalizing the first observation data into the plurality of time-based observation windows comprises normalizing, for each target node in the set of target nodes, the first observation data into: a first observation window corresponding to a before-deployment time window before the deployment of the software update to the target node; a second observation window corresponding to a during-deployment time window including the deployment of the software update to the target node; and a third observation window corresponding to an after-deployment time window after the deployment of the software update to the target node.
Clause C. The method of clause A, wherein determining the target node failure rate of the set of target nodes in each of the time-based observation windows comprises: determining a before-deployment failure rate; determining a during-deployment failure rate; and determining an after-deployment failure rate.
Clause D. The method of clause C, wherein detecting the first regression condition comprises: determining a difference between the before-deployment failure rate and the after-deployment failure rate; and when the difference exceeds a threshold, determining the first regression condition is detected.
Clause E. The method of clause C, wherein detecting the first regression condition comprises: determining a difference between the before-deployment failure rate and the during-deployment failure rate; and when the difference exceeds a threshold, determining the first regression condition is detected.
Clause F. The method of clause C, wherein detecting the second regression condition comprises: determining a difference between the control failure rate and the after-deployment failure rate; and when the difference exceeds a threshold, determining the second regression condition is detected.
Clause G. The method of clause C, wherein detecting the second regression condition comprises: determining a difference between the control failure rate and the during-deployment failure rate; and when the difference exceeds a threshold, determining the second regression condition is detected.
Clause H. The method of clause G, wherein: the set of high-confidence regression conditions include: an anomaly; the difference between the before-deployment failure rate and the after-deployment failure rate exceeding a threshold; and the difference between the control failure rate and the after-deployment failure rate exceeding a threshold; and detecting the software regression comprises determining the first regression condition, the second regression condition, and the third regression condition match the set of high-confidence regression conditions.
Clause 1. The method of clause G, wherein: the set of high-confidence regression conditions include: an anomaly; the difference between the before-deployment failure rate and the during-deployment failure rate exceeding a threshold; and the difference between the control failure rate and the during-deployment failure rate exceeding a threshold; and detecting the software regression comprises determining the first regression condition, the second regression condition, and the third regression condition match the set of high-confidence regression conditions.
Clause J. The method of clause A, wherein detecting the third regression condition comprises detecting an anomaly using anomaly detection analysis.
Clause K. The method of clause A, wherein transmitting the event based on the software regression comprises transmitting at least one selected from a group including: a message; an incident management system log entry; a command to halt deployment of the software update to the set of nodes that have not completed deployment of the software update; and a command to revert deployment of the software update to the set of nodes that have not completed deployment of the software update.
Clause L. A system, comprising: a processing system; and memory storing instructions that, when executed, cause the system to perform operations comprising: identifying, from a group of computing nodes, a set of target nodes that have completed a deployment of a software update; obtaining first observation data of the set of target nodes; normalizing the first observation data into a plurality of time-based observation windows around the deployment of the software update; detecting a first regression condition associated with the software update by performing a first observational study comparing the normalized first observation data; identifying, from the group of computing nodes, a set of nodes that have not completed deployment of the software update; selecting, from the identified set of nodes that have not completed deployment of the software update, a set of control nodes that have a control factor in common with the set of target nodes; obtaining second observation data of the set of control nodes; detecting a second regression condition associated with the software update by performing a first observational study comparing the second observation data to at least a portion of the normalized first observation data; obtaining third observation data of the set of target nodes; detecting a third regression condition associated with the software update by performing an anomaly detection analysis comparing the third observation data with a baseline value; detecting a software regression associated with the software update when the first regression condition, the second regression condition, and the third regression condition match a set of high-confidence regression conditions; and in response to detecting the software regression, transmitting an event based on the software regression.
Clause M. The system of clause L, wherein: the plurality of time-based observation windows comprises: a first observation window corresponding to a before-deployment time window before the deployment of the software update; a second observation window corresponding to a during-deployment time window including the deployment of the software update; and a third observation window corresponding to an after-deployment time window after the deployment of the software update; and the first observational study comprises: determining a before-deployment failure rate by analyzing the first observation data normalized into the before-deployment time window; determining a during-deployment failure rate by analyzing the first observation data normalized into the during-deployment time window; and determining an after-deployment failure rate by analyzing the first observation data normalized into the after-deployment time window.
Clause N. The system of clause M, wherein the first observational study further comprises: determining a first difference between the before-deployment failure rate and the after-deployment failure rate; determining a second difference between the before-deployment failure rate and the during-deployment failure rate; and when the first or second difference exceeds a threshold, determining the first regression condition is detected.
Clause O. The system of clause M, wherein the second observational study comprises: determining a control failure rate of the set of control nodes; determining a first difference between the control failure rate and the after-deployment failure rate; determining a second difference between the control failure rate and the during-deployment failure rate; and when the first or second difference exceeds a threshold, determining the second regression condition is detected.
Clause P. The system of clause L, wherein the third observational study comprises: determining a difference between when the third observation data and the baseline value; and when the difference exceeds a threshold, determining the third regression condition is detected.
Clause Q. The system of clause L, wherein the event comprises at least one selected from a group including: a message; an incident management system log entry; a command to halt deployment of the software update to the set of nodes that have not completed deployment of the software update; and a command to revert deployment of the software update to the set of nodes that have not completed deployment of the software update.
Clause R. The system of clause L, wherein the set of high-confidence regression conditions is configurable.
Clause S. A system for performing a health analysis of a software update, comprising: a first observational study model that performs operations comprising: detecting a first regression condition associated with the software update, where the first regression condition is detected by performing a first observational study comparing first observation data collected from a set of target nodes of a group, where the set of target nodes has completed a deployment of the software update; a second observational study model that performs operations comprising: detecting a second regression condition associated with the software update by performing a second observational study comparing at least a portion of the first observation data to second observation data collected from a set of control nodes selected from the group; an anomaly detection model that performs operations comprising: detecting a third regression condition associated with the software update by performing an anomaly detection analysis comparing third observation data collected from the set of target nodes to a baseline value; a decision engine that performs operations comprising: detecting a software regression associated with the software update when the first regression condition, the second regression condition, and the third regression condition match a set of high-confidence regression conditions configured for the health analysis; and an escalation engine that performs operations comprising: in response to detecting the software regression, transmitting an event based on the software regression.
Clause T. The system of clause S, wherein the event comprises at least one selected from a group including: a message; an incident management system log entry; a command to halt deployment of the software update to nodes in the group that have not completed deployment of the software update; and a command to revert deployment of the software update to the nodes in the group that have not completed deployment of the software update.

Aspects of the present invention, for example, are described above with reference to block diagrams and/or operational illustrations of methods, systems, and computer program products according to aspects of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved. Further, as used herein and in the claims, the phrase "at least one of element A, element B, or element C" is intended to convey any of: element A, element B, element C, elements A and B, elements A and C, elements B and C, and elements A, B, and C.

The description and illustration of one or more examples provided in this application are not intended to limit or restrict the scope of the invention as claimed in any way. The aspects, examples, and details provided in this application are considered sufficient to convey possession and enable others to make and use the best mode of claimed invention. The claimed invention should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the broader aspects of the general inventive concept embodied in this application that do not depart from the broader scope of the claimed invention.

## Claims

1. A method (700), comprising:
identifying, from a group of computing nodes, a set of target nodes that have completed a deployment of a software update;
obtaining (703) first observation data of the set of target nodes;
normalizing (704) the first observation data into a plurality of time-based observation windows around the deployment of the software update;
determining a target node failure rate of the set of target nodes in each of the time-based observation windows;
detecting (706) a first regression condition associated with the software update by comparing the determined target node failure rates;
identifying, from the group of computing nodes, a set of nodes that have not completed deployment of the software update;
selecting (708), from the identified set of nodes that have not completed deployment of the software update, a set of control nodes that have a control factor in common with the set of target nodes;
obtaining (703) second observation data of the set of control nodes;
determining a control failure rate of the set of control nodes;
detecting (706) a second regression condition associated with the software update by comparing the determined control failure rate and one or more of the determined target node failure rates;
obtaining (703) third observation data of the set of target nodes;
determining a baseline value of a health metric;
detecting (710) a third regression condition associated with the software update by comparing the third observation data with the baseline value;
detecting (716) a software regression associated with the software update by comparing the first regression condition, the second regression condition, and the third regression condition with a set of high-confidence regression conditions; and
in response to detecting the software regression, transmitting (720) an event based on the software regression.

2. The method of claim 1, wherein normalizing the first observation data into the plurality of time-based observation windows comprises normalizing, for each target node in the set of target nodes, the first observation data into:
a first observation window corresponding to a before-deployment time window before the deployment of the software update to the target node;
a second observation window corresponding to a during-deployment time window including the deployment of the software update to the target node; and
a third observation window corresponding to an after-deployment time window after the deployment of the software update to the target node.

3. The method of claim 1 or claim 2, wherein determining the target node failure rate of the set of target nodes in each of the time-based observation windows comprises:
determining a before-deployment failure rate;
determining a during-deployment failure rate; and
determining an after-deployment failure rate.

4. The method of claim 3, wherein detecting the first regression condition comprises:
determining a difference between the before-deployment failure rate and the after-deployment failure rate; and
when the difference exceeds a threshold, determining the first regression condition is detected.

5. The method of claim 3, wherein detecting the first regression condition comprises:
determining a difference between the before-deployment failure rate and the during-deployment failure rate; and
when the difference exceeds a threshold, determining the first regression condition is detected.

6. The method of claim 3, wherein detecting the second regression condition comprises:
determining a difference between the control failure rate and the after-deployment failure rate; and
when the difference exceeds a threshold, determining the second regression condition is detected.

7. The method of claim 3, wherein detecting the second regression condition comprises:
determining a difference between the control failure rate and the during-deployment failure rate; and
when the difference exceeds a threshold, determining the second regression condition is detected.

8. The method of claim 7, wherein:
the set of high-confidence regression conditions include:
an anomaly;
the difference between the before-deployment failure rate and the after-deployment failure rate exceeding a threshold; and
the difference between the control failure rate and the after-deployment failure rate exceeding a threshold; and
detecting the software regression comprises determining the first regression condition, the second regression condition, and the third regression condition match the set of high-confidence regression conditions.

9. The method of claim 7, wherein:
the set of high-confidence regression conditions include:
an anomaly;
the difference between the before-deployment failure rate and the during-deployment failure rate exceeding a threshold; and
the difference between the control failure rate and the during-deployment failure rate exceeding a threshold; and
detecting the software regression comprises determining the first regression condition, the second regression condition, and the third regression condition match the set of high-confidence regression conditions.

10. The method of any preceding claim, wherein detecting the third regression condition comprises detecting an anomaly using anomaly detection analysis.

11. The method of any preceding claim, wherein transmitting the event based on the software regression comprises transmitting at least one selected from a group including:
a message;
an incident management system log entry;
a command to halt deployment of the software update to the set of nodes that have not completed deployment of the software update; and
a command to revert deployment of the software update to the set of nodes that have not completed deployment of the software update.

12. A system (100), comprising:
a processing system (802); and
memory (804) storing instructions that, when executed, cause the system to perform operations comprising:
identifying , from a group of computing nodes, a set of target nodes that have completed a deployment of a software update;
obtaining (703) first observation data of the set of target nodes;
normalizing (704) the first observation data into a plurality of time-based observation windows around the deployment of the software update;
detecting (706) a first regression condition associated with the software update by performing a first observational study comparing the normalized first observation data;
identifying, from the group of computing nodes, a set of nodes that have not completed deployment of the software update;
selecting (708), from the identified set of nodes that have not completed deployment of the software update, a set of control nodes that have a control factor in common with the set of target nodes;
obtaining (703) second observation data of the set of control nodes;
detecting (706) a second regression condition associated with the software update by performing a first observational study comparing the second observation data to at least a portion of the normalized first observation data;
obtaining (703) third observation data of the set of target nodes;
detecting (710) a third regression condition associated with the software update by performing an anomaly detection analysis comparing the third observation data with a baseline value;
detecting (718) a software regression associated with the software update when the first regression condition, the second regression condition, and the third regression condition match a set of high-confidence regression conditions; and
in response to detecting the software regression, transmitting (720) an event based on the software regression.

13. The system of claim 12, wherein:
the plurality of time-based observation windows comprises:
a first observation window corresponding to a before-deployment time window before the deployment of the software update;
a second observation window corresponding to a during-deployment time window including the deployment of the software update; and
a third observation window corresponding to an after-deployment time window after the deployment of the software update; and
the first observational study comprises:
determining a before-deployment failure rate by analyzing the first observation data normalized into the before-deployment time window;
determining a during-deployment failure rate by analyzing the first observation data normalized into the during-deployment time window; and
determining an after-deployment failure rate by analyzing the first observation data normalized into the after-deployment time window.

14. The system of claim 12 or claim 13, wherein the first observational study further comprises:
determining a first difference between the before-deployment failure rate and the after-deployment failure rate;
determining a second difference between the before-deployment failure rate and the during-deployment failure rate; and
when the first or second difference exceeds a threshold, determining the first regression condition is detected.

15. A system (100) for performing a health analysis of a software update, comprising:
a first observational study model (204) that performs operations comprising:
detecting (706) a first regression condition associated with the software update, where the first regression condition is detected by performing a first observational study comparing first observation data collected from a set of target nodes of a group, where the set of target nodes has completed a deployment of the software update;
a second observational study model (206) that performs operations comprising:
detecting (706) a second regression condition associated with the software update by performing a second observational study comparing at least a portion of the first observation data to second observation data collected from a set of control nodes selected from the group;
an anomaly detection model (208) that performs operations comprising:
detecting (706) a third regression condition associated with the software update by performing an anomaly detection analysis comparing third observation data collected from the set of target nodes to a baseline value;
a decision engine (210) that performs operations comprising:
detecting (718) a software regression associated with the software update when the first regression condition, the second regression condition, and the third regression condition match a set of high-confidence regression conditions configured for the health analysis; and
an escalation engine (212) that performs operations comprising:
in response to detecting the software regression, transmitting (720) an event based on the software regression.
